# EUROPÄISCHE PATENTANMELDUNG

(11) **EP 0 750 012 A1**
(43) Veröffentlichungstag der Anmeldung: **27.12.1996**
(21) Anmeldenummer: 96109256.6
(22) Anmeldetag: 10.06.1996
(51) Int. Cl.: C08K 9/02

(54) **Lasermarkierbare Kunststoffe**

(30) Priorität: 23.06.1995 DE 19522397
(71) Anmelder: MERCK PATENT GmbH, 64293 Darmstadt (DE)
(72) Erfinder: Schmidt, Christoph, Dr., 65830 Kriftel (DE); Reynders, Peter, Dr., 64347 Griesheim (DE); Schoen, Sabine, Dr., 64287 Darmstadt (DE)

(57) **Zusammenfassung**

Die vorliegende Erfindung betrifft lasermarkierbare Kunststoffe, die sich dadurch auszeichnen, daß sie nichtglänzende Pigmente auf Basis von Schichtsilikaten, die eine unregelmäßige Oberfläche aufweisen, enthalten.

## Beschreibung

Die vorliegende Erfindung betrifft lasermarkierbare Kunststoffe, die sich dadurch auszeichnen, daß sie nichtglänzende Pigmente auf Basis von Schichtsilikaten, die eine unregelmäßige Oberfläche aufweisen, enthalten.

Die Kennzeichnung von Produktionsgütern wird in fast allen Industriezweigen zunehmend wichtiger. So müssen häufig zum Beispiel Produktionsdaten, Verfallsdaten, Barcodes, Firmenlogos, Seriennummern etc. aufgebracht werden. Derzeit werden diese Markierungen überwiegend mit konventionellen Techniken wie Drucken, Prägen, Stempeln und Etikettieren ausgeführt. Wachsende Bedeutung gewinnt aber die berührungslose, sehr schnelle und flexible Markierung mit Lasern, insbesondere bei Kunststoffen. Mit dieser Technik ist es möglich graphische Beschriftungen, wie z.B. Barcodes, mit hoher Geschwindigkeit auch auf eine nicht plane Oberfläche aufzubringen. Da sich die Beschriftung im Kunststoffkörper selbst befindet, ist sie dauerhaft und abriebbeständig.

Viele Kunststoffe, wie z.B. Polyolefine und Polystyrole, lassen sich bisher nur schwierig oder überhaupt nicht mit Laser markieren. Ein CO₂-Laser, der Licht im Infrarotbereich bei 10,6 µm aussendet, bewirkt bei Polyolefinen und Polystyrolen selbst bei sehr hohen Leistungen nur eine schwache, kaum lesbare Markierung. Im Falle der Elastomeren Polyurethan und Polyetherestern tritt mit Nd-YAG-Lasern keine Wechselwirkung, bei CO₂-Lasern eine Gravur auf. Der Kunststoff darf das Laserlicht nicht völlig reflektieren oder durchlassen, da es dann zu keiner Wechselwirkung kommt. Es darf aber auch nicht zu einer starken Absorption kommen, da in diesem Fall der Kunststoff verdampft und nur eine Gravur zurückbleibt. Die Absorption der Laserstrahlen und somit die Wechselwirkung mit der Materie ist abhängig von dem chemischen Aufbau des Kunststoffes und der verwendeten Wellenlänge des Lasers. Vielfach ist es notwendig, damit Kunststoffe laserbeschriftbar werden, entsprechende Zusatzstoffe, z.B. Absorber, zuzugeben.

Für die Laserkennzeichnung von Kunststoffen werden neben CO₂-Lasern zunehmend Nd-YAG-Laser verwendet. Die üblicherweise verwendeten YAG-Laser geben einen gepulsten Energiestrahl mit einer charakteristischen Wellenlänge von 1064 nm oder 532 nm ab. Das Absorbermaterial muß bei der verwendeten Laserwellenlänge eine ausgeprägte Absorption zeigen, um bei den schnellen Beschriftungsvorgängen eine ausreichende Reaktion zu zeigen.

Aus der DE-OS 29 36 926 ist bekannt, die Beschriftung eines polymeren Materials mittels Laserlicht dadurch zu erzielen, daß man dem Kunststoff einen sich bei der Einwirkung von Energiestrahlung verfärbenden Füllstoff wie Ruß oder Graphit beimischt.

In der EP 0 400 305 A2 werden mit Laserlicht beschriftbare hochpolymere Materialien beschrieben, die als verfärbenden Zuschlagstoff Kupfer(II)hydroxidphosphat oder Molybdän(VI)oxid enthalten.

Eine schwarzpigmenthaltige Kunststoff-Formmasse auf Basis eines organischen thermoplastischen Polymers, die durch Einwirkung von Laser-Strahlung mit Zeichen versehen werden kann, ist aus der EP 0 522 370 A1 bekannt.

Aus dem Artikel "Pearl Lustre Pigments-Characteristics and Functional Effects" in Speciality Chemicals, Mai 1982, Vol. 2, Nr. 2 ist die Verwendung von Perlglanzpigmenten für die Lasermarkierung bekannt. Perlglanzpigmente haben aber den Nachteil, daß sie die koloristische Beschaffenheit des Kunststoffes sehr stark verändern, was oft unerwünscht ist.

Die aus dem Stand der Technik bekannten Füllstoffe besitzen aber entweder den Nachteil, daß sie den zu beschriftenden Kunststoff nachhaltig einfärben und folglich die Laserbeschriftung, die üblicherweise eine dunkle Schrift auf einem helleren Untergrund ist, dann nicht mehr ausreichend kontrastreich ist, oder daß, wie Kaolin, die Markierung sehr schwach ist und erst bei hohen Einsatzmengen des Zuschlagstoffes gut sichtbar wird.

Der Füllstoff bzw. das erfolgreiche Absorptionsmittel sollte daher eine sehr helle neutrale Eigenfarbe bzw. die Eigenschaften des zu markierenden vorgefärbten Kunststoffes besitzen oder nur in sehr geringen Mengen eingesetzt werden müssen.

Aufgabe der vorliegenden Erfindung war es daher lasermarkierbare Kunststoffe zu finden, die unter Einwirkung von Laserlicht eine Markierung mit hohem Kontrast ermöglichen und nur in geringen Mengen eingesetzt werden müssen.

Überraschenderweise wurde gefunden, daß thermoplastische Kunststoffe, die nichtglänzenden Pigmente auf Basis von Schichtsilikaten enthalten, eine kontrastreiche und kantenscharfe Markierung ermöglichen.

Gegenstand der Erfindung sind daher lasermarkierbare Kunststoffe, dadurch gekennzeichnet, daß Kunststoffe nichtglänzende Pigmente auf Basis von Schichtsilikaten, die eine unregelmäßige Oberfläche aufweisen und mit ein oder mehreren Metalloxiden, Eisenblau und/oder basischem Kupferphosphat beschichtet sind, enthalten.

Durch den Zusatz der nichtglänzenden Pigmente in Konzentrationen von 0,01 bis 4 Gew.% bezogen auf das Kunststoffsystem, vorzugsweise 0,5 bis 2,5 Gew.% und insbesondere 0,3 bis 2 Gew.%, wird bei der Lasermarkietung ein hoher Kontrast erreicht. Die Konzentration der Pigmente im Kunststoff ist allerdings abhängig von dem eingesetzten Kunststoffsystem. Der geringe Pigmentanteil verändert das Kunststoffsystem unwesentlich und beeinflußt nicht dessen Verarbeitbarkeit.

Transparente Thermoplaste mit derartigen Pigmenten in Reineinfärbung dotiert zeigen ein leicht metallisches Schimmern, behalten aber ihre Transparenz. Durch den Zusatz von 0,2 bis 10 Gew.%, vorzugsweise 0,5 bis 3 Gew.% an deckenden Pigmenten, wie z.B. Titandioxid, kann dieser metallische Glanz bei Bedarf völlig überdeckt werden. Ferner können den Kunststoffen Farbpigmente zugesetzt werden, die farbliche Variationen jeder Art zulassen und gleichzeitig eine Beibehaltung der Lasermarkierung gewährleisten.

Die für die Markierung geeigneten Substrate sind Schichtsilikate, die ihre plättchenförmige Struktur weitestgehend verloren haben oder eine rauhe und unebene Oberfläche aufweisen. Besonders bevorzugt wird Glimmer, insbesondere Kaliglimmer (Muskovit) eingesetzt. Bevorzugte Schichtsilikate sind Talk, Kaolin oder Sericit, während als Glimmer besonders bevorzugt Muscovit, Biotit, Phlogopit, Vermiculit sowie auch synthetischer Glimmer eingesetzt werden. Die Schichtsilikate werden einem Naß- oder Trockenmahlverfahren wie in der DE 44 41 223 beschrieben unterworfen, wo die Bedingungen so gewählt werden, daß die plättchenförmige Struktur der Schichtsilikate und/oder ihre glatte Oberfläche weitestgehend zerstört wird.

Die Substrate werden anschließend mit farbigen oder farblosen Metalloxiden wie TiO₂, Fe₂O₃, SnO₂, Cr₂O₃, ZnO und anderen Metalloxiden, allein oder in Mischungen in einer einheitlichen Schicht oder in aufeinanderfolgenden Schichten belegt. Die Beschichtung erfolgt wie sie z.B. in den deutschen Patenten und Patentanmeldungen 14 67 468, 19 59 998, 20 09 566, 22 14 545, 22 15 191, 22 44 298, 23 12 331, 25 22 572, 31 37 808, 31 37 809, 31 51 343, 31 51 354, 31 51 355, 32 11 602 und 32 35 017 beschrieben wird. Vorzugsweise werden als nicht glänzende Pigmente mit TiO₂, Eisenblau oder Pseudobrookit beschichteter Glimmer, insbesondere Muskovit, für die Lasermarkierung verwendet.

Alle bekannten Kunststoffe wie sie z.B. im Ullmann, Bd. 15, S. 457 ff., Verlag VCH beschrieben werden, können für die Lasermarkierung Anwendung finden. Geeignete Kunststoffe sind z.B. Polyethylen, Polypropylen, Polyamide, Polyester, Polyphenylenoxid, Polybutylenterephthalat, Polymethylmethacrylat, Polyvinylacetal, Polystyrol, Acrylnitril-Butadien-Styrol (ABS), Acrylnitril-Styrol-Acrylester (ASA), Polycarbonat, Polyethersulfon, Polyetherketone und ihre Copolymere und/oder deren Mischungen. Insbesondere geeignet sind thermoplastische Polyurethane (TPU) aufgrund ihrer hochwertigen mechanischen Eigenschaften und den kostengünstigen Verarbeitungsmethoden. Thermoplastische Polyurethane sind seit langen aus zahlreichen Literaturveröffentlichungen und Patentschriften, z.B. aus der GB 1 057 018 oder EP 0 564 931, bekannt.

Die Einarbeitung der Pigmente in den thermoplastischen Kunststoff erfolgt, indem das Kunststoffgranulat mit dem Pigment gemischt und dann unter Wärmeeinwirkung verformt wird. Dem Kunststoffgranulat können bei der Einarbeitung der Pigmente gegebenenfalls Haftmittel, organische polymerverträgliche Lösungsmittel, Stabilisatoren und/oder unter den Arbeitsbedingungen temperaturstabile Tenside zugesetzt werden. Die Herstellung der Kunststoffgranulat/Pigment-Mischung erfolgt in der Regel so, daß in einem geeigneten Mischer das Kunststoffgranulat vorgelegt, mit eventuellen Zusätzen benetzt und danach das Pigment zugesetzt und untergemischt wird. Die so erhaltene Mischung kann dann direkt in einem Extruder oder einer Spritzgießmaschine verarbeitet werden. Die bei dei` Verarbeitung gebildeten Formkörper zeigen eine sehr homogene Verteilung des Pigments. Anschließend findet die Lasermarkierung statt.

Die Beschriftung mit dem Laser erfolgt derart, daß der Probenkörper in den Strahlengang eines gepulsten Lasers, vorzugsweise eines Nd-YAG-Lasers gebracht wird. Ferner ist eine Beschriftung mit einem Excimer-Laser, z.B. über eine Maskentechnik, möglich. Jedoch sind auch mit anderen herkömmlichen Lasertypen, die eine Wellenlänge in einem Bereich hoher Absorption des verwendeteten Pigments aufweisen, die gewünschten Ergebnisse zu erzielen. Der erhaltene Farbton und die Farbtiefe werden durch die Bestrahlungszeit (bzw. Pulszahl bei Pulslasern) und Bestrahlungsleistung des Lasers bestimmt. Die Leistung der verwendeten Laser hängt von der jeweiligen Anwendung ab und kann im Einzelfall vom Fachmann ohne weiteres ermittelt werden.

Die Verwendung des erfindungsgemäßen pigmentierten Kunststoffes kann auf allen Gebieten erfolgen, wo bisher übliche Druckverfahren zur Beschriftung von Kunststoffen eingesetzt werden. Beispielsweise können Formkörper aus dem erfindungsgemäßen Kunststoff in der Elektro-, Elektronik- und Kraftfahrzeugindustrie Anwendung finden. Die Kennzeichnung und Beschriftung von z.B. Kabeln, Leitungen, Zierleisten bzw. Funktionsteilen im Heizungs-, Lüftungs- und Kühlbereich oder Schalter, Stecker, Hebel und Griffe, die aus dem erfindungsgemäßen Kunststoff bestehen, können selbst an schwer zugänglichen Stellen mit Hilfe von Laserlicht markiert werden. Weiterhin kann das erfindungsgemäße Kunststoffsystem aufgrund seines geringen Schwermetallanteils bei Verpackungen im Lebensmittelbereich oder im Spielzeugbereich eingesetzt werden. Die Markierungen auf den Verpackungen zeichnen sich dadurch aus, daß sie wisch- und kratzfest, stabil bei nachträglichen Sterilisationsprozessen, und hygienisch rein beim Markierungsprozeß aufbringbar sind. Komplette Etikettenbilder können dauerhaft auf die Verpackung für ein Mehrwegsystem aufgebracht werden. Ein weiteres wichtiges Anwendungsgebiet für die Laserbeschriftung sind Kunststoffmarken zur individuellen Kennzeichnung von Tieren, sogenannte Cattle Tags oder Ohrmarken. Die Lasermarkierung von Kunststoffgegenständen bzw. Formkörpern, die aus dem erfindungsgemäßen Kunststoff bestehen, ist somit möglich. Weiterhin können die nichtglänzenden Pigmente auch für die Lasermarkierung von Druckfarben und weiteren dem Fachmann geeigneten transparenten Materialien verwendet werden.

Die folgenden Beispiele sollen die Erfindung erläutern ohne sie jedoch zu begrenzen.

### Beispiel 1

### a) Herstellung von trockengemahlenem Glimmer

250 kg von natürlich vorkommenden Glimmer (Plättchendurchmesser bis etwa 2 cm) werden in einer industriellen Rührwerkskugelmühle (etwa 4 t Mahlkörper aus Korund; Durchmesser der Mahlkörper etwa 5 mm) bei einem Leistungseintrag von maximal etwa 200 kW trocken gemahlen.

Das Mahlgut wird anschließend auf einem Windsichter klassiert wobei folgende Fraktionen erhalten werden:

| | d₉₅/µm | d₅₀/µm |
|---|---|---|
| Fraktion I | 24 | 8 |
| Fraktion II | 12 | 4,5 |
| d₉₅ und d₅₀ sind dabei die Durchmesserwerte, unter denen 95 bzw. 50 % der gemahlenen Partikel liegen. | | |

### b) Beschichtung mit Turnbullsblau

100 g trockengemahlener Glimmer der Fraktion I werden in 2 l vollentsalztem Wasser suspendiert und unter Rühren auf 75 °C erhitzt. Der pH-Wert wird mit 20%iger H₂SO₄ auf 4,0 eingestellt, und es werden dann mit einer Geschwindigkeit von 0,3 ml/Min. eine wäßrige K₄[Fe(CN)₆]-Lösung (109,88 g K₄[Fe(CN)₆] · 3 H₂O in 1500 ml vollentsalztem Wasser) und eine wäßrige FeSO₄-Lösung (139,16 g FeSO₄, 46,4 g NH₄Cl in mit 80 ml 20%iger H₂SO₄ angesäuertem vollentsalztem Wasser, Gesamtvolumen 1500 ml) gleichzeitig, aber getrennt zugegeben. Nach je 15 Min. wird die Dosierrate über 0,7 ml/Min. und 1,3 ml/Min. auf 2,0 ml/Min. gesteigert und bei diesem Wert die Belegung bis zum Verbrauch beider Lösungen geführt. Der pH-Wert wird mit 10%iger (NH₄)₂CO₃-Lösung konstant gehalten.

Nach Zugabe wird die Suspension bei abgeschalteter Heizung noch 15 Min. nachgerührt. Dann wird abgesaugt und mit 45 l vollentsalztem Wasser chloridfrei gewaschen. Das Pigment wird anschließend 8 h bei 110 °C getrocknet. Man erhält ein blaues Pigment mit hohem Deckvermögen und hoher Farbintensität, welches 50 % Turnbulls Blau enthält.

Polypropylen wird mit 0,5 Gew.% des Pigments aus b) pigmentiert und auf einer Spritzgießmaschine verarbeitet. Das erhaltene Formteil (Plättchen) wird anschließend mit einem CO₂-Laser beschriftet (Energiedichte: ∼ 3 J/cm²). Die Markierung zeigt bereits bei niedriger Energiedichte eine deutlich helle Markierung und einen hohen Kontrast.

### Beispiel 2

100 g Micarvor M20 (Glimmer der Fa. Dormineral, Hirschau, Deutschland) werden in 2 l Wasser suspendiert und auf 75 °C erhitzt. Anschließend werden 204 ml TiCl₄-Lösung (350 g/l Wasser) zu der Glimmersuspension zugetropft. Während der Zugabe wird der pH-Wert mit 32%iger NaOH-Lösung auf pH = 2,2 konstant gehalten. Zuletzt wird das fertige Produkt abfiltriert, gewaschen, 12 h bei 120 °C getrocknet und 0,5 h bei 850 °C geglüht.

Das TiO₂-Glimmerpigment wird zu jeweils 0,5 Gew.% in Polyethylen und Polypropylen eingearbeitet. Die Markierung mit dem CO₂-Laser führt in beiden Fällen zu hellen Markierungen mit einem hohen Kontrast (Energiedichte: ∼ 3 J/cm²).

### Beispiel 3

100 g Micarvor M20 (Glimmer der Fa. Dormineral, Hirschau, Deutschland) werden in 2 l Wasser suspendiert und auf 75 °C erhitzt. Dann werden 8,86 g SnCl₄ · 5 H₂O in 150 ml verdünnter HCl gelöst und unter Rühren zu der Suspension hinzugegeben. Bei einem pH-Wert von 1,8 wird der pH mit NaOH (w = 32 %) konstant gehalten. Dann werden 204 ml einer TiCl₄-Lösung (350 g/l) hinzugetropft. Nach der Zugabe wird neutralisiert und, anschließend werden 3,7 g CaCl₂ · 2 H₂O sowie 6 ml Perhydrol gleichzeitig zugegeben. Die Suspension wird analog Beispiel 2 aufgearbeitet.

Das Produkt wird unter den Bedingungen wie in Beispiel 2 geprüft und ergibt ähnlich gute Markierungen.

### Beispiel 4

100 g Micarvor M20 werden in 2 l Wasser suspendiert und auf 75 °C erhitzt. Der pH-Wert wird mit HCl (w = 15 %) auf 2,1 eingestellt. Dann wird ein Gemisch aus 426 ml TiCl₄-Lösung (366 g/l) und 37 g einer 35%igen SbCl₃-Lösung zudosiert und der pH-Wert mit NaOH (w = 32 %) konstant gehalten. Es wird 15 Min. nachgerührt, und anschließend wird der pH-Wert mit NaOH auf 5,0 eingestellt. Die Pigmentsuspension wird wie im Beispiel 2 aufgearbeitet.

Das Produkt wird unter den Bedingungen wie in Beispiel 2 geprüft und ergibt ähnlich gute Markierungen.

### Beispiel 5

Die Versuchsdurchführung erfolgt analog Beispiel 4, jedoch wird ein Gemisch aus 150 g SnCl₄ · 5 H₂O und 48 g einer 35%igen SbCl₃-Lösung verwendet.

Das Produkt wird unter den Bedingungen wie in Beispiel 2 geprüft und ergibt ähnlich gute Markierungen, insbesondere mit dem Nd-YAG-Laser.

### Beispiel 6

50 g Micarvor M20 werden mit 5,3 g Na₂CO₃ in 500 ml H₂O suspendiert (pH = 11,5). Dann wird eine Lösung von 12,5 g CuSO₄ · 5 H₂O in 500 ml Wasser bei Raumtemperatur zudosiert. Die Suspension wird himmelblau. Der pH-Wert sinkt auf etwa 6,5. Die Suspension wird auf 60 °C erhitzt und dann mit NaOH (w = 32 %) auf pH 8,0 eingestellt. Anschließend werden 2,7 g H₃PO₄ (w = 85%) in 19,3 ml Wasser gelöst und zugetropft. Die Suspension wird blaugrün. Es wird 1,5 h nachgerührt, 0,5 h bei 100 °C gekocht, und unter Rühren läßt man die Pigmentsuspension abkühlen. Das bleichgrüne Pigment wird abgesaugt, mit H₂O gewaschen und 12 h bei 120 °C getrocknet.

Das Produkt wird unter den Bedingungen wie in Beispiel 2 geprüft und ergibt ähnlich gute Markierungen, insbesondere mit dem Nd-YAG-Laser.

## Patentansprüche

1. Lasermarkierbare Kunststoffe, dadurch gekennzeichnet, daß Kunststoffe nichtglänzende Pigmente auf Basis von Schichtsilikaten, die eine unregelmäßige Oberfläche aufweisen und mit ein oder mehreren Metalloxiden, Eisenblau und/oder basischem Kupferphosphat beschichtet sind, enthalten.

2. Lasermarkierbare Kunststoffe nach Anspruch 1, dadurch gekennzeichnet, daß der Anteil an Pigmenten 0,01-4 Gew.%, bezogen auf das Kunststoffsystem, beträgt.

3. Lasermarkierbare Kunststoffe nach Anspruch 1 oder 2, dadurch gekennzeichnet, daß das nichtglänzende Pigment ein mit ein oder mehreren Metalloxiden beschichtetes Glimmerpigment ist.

4. Lasermarkierbare Kunststoffe nach Anspruch 3, dadurch gekennzeichnet, daß das Glimmerpigment ein Kaliglimmer (Muskovit) ist.

5. Lasermarkierbare Kunststoffe nach einem der Ansprüche 1 bis 4 dadurch gekennzeichnet, daß das nichtglänzende Pigment ein mit Titandioxid, Pseudobrookit oder Eisenblau beschichtetes Schichtsilikat ist.

6. Lasermarkierbare Kunststoffe nach Anspruch 1, dadurch gekennzeichnet, daß der Kunststoff Polyethylen oder Polypropylen ist.
